(19) Europäisches Patentamt
European Patent Office
Office européen des brevets

(11) **EP 4 621 267 A1**

(12) **EUROPEAN PATENT APPLICATION**
published in accordance with Art. 153(4) EPC

(43) Date of publication:
**24.09.2025 Bulletin 2025/39**

(21) Application number: **23890704.2**

(22) Date of filing: **10.11.2023**

(51) International Patent Classification (IPC):
**F16H 61/04** (2006.01)

(52) Cooperative Patent Classification (CPC):
**F16H 61/02; F16H 61/04**

(86) International application number:
**PCT/CN2023/131031**

(87) International publication number:
**WO 2024/104270 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 CN 202211449384**

(71) Applicants:
• **Zhejiang Geely Holding Group Co., Ltd.**
**Hangzhou, Zhejiang 310051 (CN)**
• **Ningbo Geely Royal Engine Components Co.,
Ltd.**
**Ningbo City, Zhejiang 315336 (CN)**
• **Aurobay Technology Co., Ltd.**
**Ningbo, Zhejiang 315899 (CN)**

(72) Inventors:
• **JING, Junchao**
**Hangzhou Bay New District, Ningbo, Zhejiang
315336 (CN)**
• **LIU, Yiqiang**
**Hangzhou Bay New District, Ningbo, Zhejiang
315336 (CN)**
• **LI, Qi**
**Hangzhou Bay New District, Ningbo, Zhejiang
315336 (CN)**
• **HUANG, Weishan**
**Hangzhou Bay New District, Ningbo, Zhejiang
315336 (CN)**

(74) Representative: **Barker Brettell LLP**
**100 Hagley Road**
**Edgbaston**
**Birmingham B16 8QQ (GB)**

(54) **GEAR SHIFTING CONTROL METHOD, VEHICLE CONTROLLER, VEHICLE AND STORAGE MEDIUM**

(57) A gear shifting control method includes: determining (110) a torque exchange duration and a total clutch request torque T0 in a torque exchange phase; within the torque exchange duration, gradually decreasing (120) a gear shifting torque Toff allocated to an offgoing clutch, and gradually increasing a gear shifting torque Ton allocated to an oncoming clutch, where it is satisfied that Toff +Ton =T0; where Ton and Toff are set to change nonlinearly within the torque exchange duration to suppress an impact of a response speed change of a torque control system on smoothness of a torque exchange. A vehicle controller, a vehicle, and a storage medium are also disclosed.

FIG. 4

## Description

This application claims priority to Chinese patent application No. 202211449384.6, titled "GEAR SHIFTING CONTROL METHOD, VEHICLE CONTROLLER, VEHICLE AND STORAGE MEDIUM" and filed with the China National Intellectual Property Administration on November 18, 2022, which should be understood as being hereby incorporated by reference in its entirety.

## TECHNICAL FIELD

The present disclosure relates to, but is not limited to, the field of vehicle gear shifting technology.

## BACKGROUND

Vehicles need to shift gears during travelling, and the gear shifting may be implemented by simultaneously controlling the disengagement of an offgoing clutch (Offgoing Clutch) and the engagement of an oncoming clutch (Oncoming Clutch). The performance of the gear shifting control has an important impact on drivability, but the smoothness of the gear shifting process still needs to be improved at present.

## SUMMARY

The following is a summary of the subject matter described in detail herein. This summary is not intended to limit the scope of protection of the claims.

An embodiment of the present disclosure provides a gear shifting control method, including:

determining a torque exchange duration and a total clutch request torque T0 in a torque exchange phase;

within the torque exchange duration, gradually decreasing a gear shifting torque Toff allocated to an offgoing clutch, and gradually increasing a gear shifting torque Ton allocated to an oncoming clutch, where it is satisfied that Toff +Ton =T0;

where Ton and Toff are set to change nonlinearly within the torque exchange duration to suppress an impact of a response speed change of a torque control system on smoothness of a torque exchange.

An embodiment of the present disclosure also provides a vehicle controller, including a processor and a memory storing a computer program, where the processor is capable of implementing the gear shifting control method described in any embodiment of the present disclosure when executing the computer program.

An embodiment of the present disclosure also provides a vehicle, including the vehicle controller described in any embodiment of the present disclosure.

An embodiment of the present disclosure also provides a non-transitory computer-readable storage medium, where the computer-readable storage medium stores a computer program, and when the computer program is executed by a processor, the gear shifting control method described in any embodiment of the present disclosure is capable of being implemented.

In the above embodiments of the present disclosure, in the torque exchange phase, the gear shifting torque allocated to the offgoing clutch and the gear shifting torque allocated to the oncoming clutch change nonlinearly, which can adapt to the nonlinear change of the response of a clutch hydraulic system in the torque exchange process and improve the smoothness of the gear shifting process.

After reading and comprehending the drawings and detailed description, other aspects can be understood.

## BRIEF DESCRIPTION OF DRAWINGS

FIG. 1 is a schematic diagram of a hybrid vehicle in a series-connection mode according to an embodiment of the present disclosure.

FIG. 2 is a schematic diagram of a hybrid vehicle in a parallel-connection mode according to an embodiment of the present disclosure.

FIG. 3 is a schematic diagram of a hybrid architecture according to an embodiment of the present disclosure.

FIG. 4 is a flow chart of a gear shifting control method according to an embodiment of the present disclosure.

FIG. 5A is a diagram of a progress percentage curve of an oncoming clutch without correction.

FIG. 5B is a diagram of a progress percentage curve of an oncoming clutch after correction according to an embodiment of the present disclosure.

FIG. 5C is a diagram of a progress percentage curve of an offgoing clutch without correction.

FIG. 5D is a diagram of a progress percentage curve of an offgoing clutch after correction according to an embodiment of the present disclosure.

FIG. 6 is a schematic diagram of a change in an oil pressure in an oil filling phase according to an embodiment of the present disclosure.

FIG. 7 is a diagram of a hardware structure of a gear shifting control device according to an embodiment of the present disclosure.

## DESCRIPTION OF EMBODIMENTS

The technical solutions in embodiments of the present disclosure will be described clearly and comprehensively below in combination with the accompanying drawings in the embodiments of the present disclosure. Obviously, the described embodiments are only part of the embodiments of the present disclosure, not all of the embodiments. Based on the embodiments in the present disclosure, all other embodiments obtained by those skilled in the art without creative effort fall within the scope of protection of the present disclosure.

In the description of the present disclosure, words such as "exemplary" or "for example" are used to indicate examples, illustrations, or explanations. Any embodiment described as "exemplary" or "for example" in the present disclosure should not be interpreted as being more preferred or advantageous than other embodiments. "And/or" herein is a description of the association relationship of associated objects, indicating that three kinds of relationships may exist. For example, A and/or B can represent three situations, i.e., A exists alone, A and B exist at the same time, and B exists alone. In the description of the present disclosure, "multiple" means at least two, such as two, three, etc., unless otherwise clearly and specifically defined.

It should be noted that the directional indications (such as up, down, left, right, front, and back) in the embodiments of the present disclosure are only used to explain the relative positional relationship between components, the movement situation of components and/or the like under a certain specific posture (as shown in the drawings), rather than indicating or implying that the indicated structure has a specific orientation, or is constructed and operated in a specific orientation. If the specific posture changes, the directional indications will also change accordingly. Therefore, they cannot be understood as limitations on the present disclosure. In addition, in the embodiments of the present disclosure, the descriptions such as those involving "first", "second", etc., are only used for descriptive purposes, and cannot be understood as indicating or implying their relative importance or implicitly indicating the number of technical features indicated. Therefore, the features defined by "first" and "second" may explicitly or implicitly include at least one of such features.

In the present disclosure, unless otherwise clearly specified and defined, the terms "connection", "fixation", and the like should be understood in a broad sense. For example, "fixation" may be a fixed connection, a detachable connection, or an integral connection; it may be a mechanical connection or an electrical connection; it may be a direct connection or an indirect connection through an intermediate medium; it may be the internal connection of two elements or the interaction relationship between two elements, unless otherwise clearly defined. For persons of ordinary skill in the art, the specific meanings of the above terms in the present disclosure can be understood according to specific circumstances.

The technical solutions of the embodiments of the present disclosure can be combined with each other, but this is based on the fact that persons of ordinary skill in the art can implement them. When technical solutions are contradictory when being combined or cannot be combined, it should be deemed that such combination of technical solutions does not exist and is not within the scope of protection claimed by the present disclosure.

With the increasingly stringent requirements for fuel consumption and emissions, along with the development of electrification systems, hybrid technology is the key to achieving energy conservation and emission reduction. In order to adapt to and meet emission requirements, vehicle manufacturers and parts suppliers are all seeking solutions. At present, for pure electric vehicle technology systems, the battery technology is complex and the costs are relatively high, hence hybrid systems are being vigorously promoted.

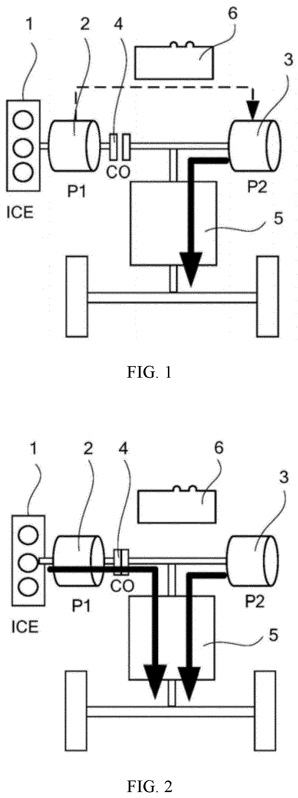

Gear shifting control methods of the embodiments of the present disclosure can be applied to a hybrid vehicle shown in FIG. 1 to FIG. 3. A dual-motor hybrid system has three modes: a pure electric mode, a series-connection mode, and a parallel-connection mode, and the hybrid vehicle can switch between these modes. As shown in the figures, the hybrid vehicle includes a first power mechanism and a second power mechanism. The first power mechanism includes an engine 1 (denoted by ICE in the figures) and a first electric machinery 2 (denoted by P1 in the figures) which are connected. The second power mechanism includes a second electric machinery 3 (denoted by P2 in the figures). A clutch 4 (denoted by C0 in the figures) for mode switching is connected between the first electric machinery 2 and the second electric machinery 3. FIG. 1 is a schematic diagram of a driving mode of a hybrid vehicle in a series-connection mode. In the series-connection mode, the clutch 4 is in a disengaged state, the engine 1 supplies power to a battery 6 and the second electric machinery 3 through the first electric machinery 2, and the second electric machinery 3 drives wheels through a transmission 5. FIG 2 is a schematic diagram of a driving mode of a hybrid vehicle in a parallel-connection mode. In the parallel-connection mode, the clutch 4 is in an engaged state (also referred to as a combined state), and the engine 1 and the second electric machinery 3 drive the wheels together through the transmission 5.

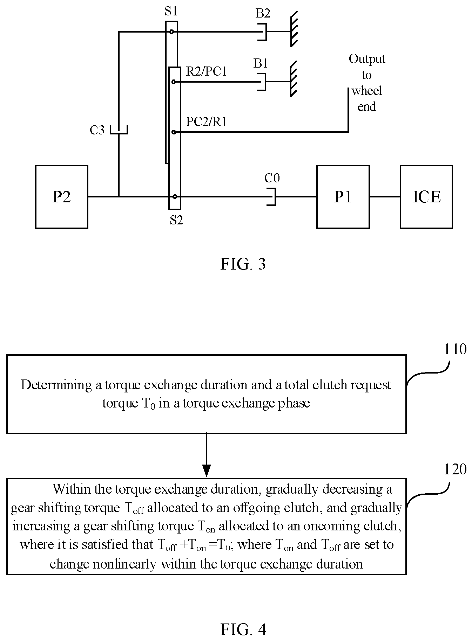

The gear shifting control methods of the embodiments of the present disclosure can be applied to a hybrid architecture shown in FIG. 3. As shown in the figure, the hybrid architecture includes a first power mechanism, a second power mechanism and a transmission mechanism. The first power mechanism includes an engine ICE and a first electric machinery P1 which are connected, and the second power mechanism includes a second electric machinery P2. The transmission mechanism includes a fourth clutch C0 that can be used for mode switching, a double-row planetary gear, as well as a first clutch B1, a second clutch B2 and a third clutch C3 that can be used for gear shifting control. The double-row planetary gear includes a first planetary gear formed by a first sun gear S1, a first planet carrier PC1, and a first ring gear R1, as well as a second planetary gear formed by a second sun gear S2, a second planet carrier PC2, and a second ring gear R2.

As shown in the figure, the output shaft of the first electric machinery P1 can be connected to the second sun gear S2 through the fourth clutch C0 to drive the second sun gear S2. The output shaft of the second electric machinery P2 is connected to the second sun gear S2 to drive the second sun gear S2. The output shaft of the second electric machinery P2 can also be connected to the first sun gear S1 through the third clutch C3 to drive the first sun gear S1. The first sun gear S1 is connected to one end of the second clutch B2, and the other end of the second clutch B2 is connected to a hydraulic system. The first planetary carrier PC1 is connected to the second ring gear R2, and the first planetary carrier PC1 and the second ring gear R2 are both connected to one end of the first clutch B1, with the other end of the first clutch B1 being connected to the hydraulic system. The first ring gear R1 is connected to the second planetary carrier PC2. The power inputted to the double-row planetary gear is transmitted to the wheel end from the output shaft connected to the first ring gear R1 and the second planetary carrier PC2.

The above hybrid architecture can realize the switching between three gears included in forward gears. Among the first clutch B1, the second clutch B2, and the third clutch C3, it is the first gear when only the first clutch B1 is engaged, it is the second gear when only the second clutch B2 is engaged, and it is the third gear when only the third clutch C3 is engaged. The switching between the gears can be realized by disengaging one of the clutches (i.e., an offgoing clutch) and engaging another clutch (i.e., an oncoming clutch). The offgoing clutch may also be called an active clutch, and the oncoming clutch may also be called a passive clutch. After the states of the offgoing clutch and the oncoming clutch are changed, the change in the power transmission path leads to a change in the transmission ratio, thereby realizing the gear shifting.

It can be understood that, taking the first clutch B1 as an example, it is an offgoing clutch at a first moment and is controlled to disengage, and it is an oncoming clutch at a second moment and is controlled to engage. The first moment and the second moment represent different moments, but do not represent a specific chronological order. For example, when the current gear is the first gear, the first clutch B1 is engaged, and the second clutch B2 and the third clutch C3 are disengaged; to switch from the first gear to the second gear, the first clutch B1 is controlled to be the offgoing clutch and is disengaged, the second clutch B2 is controlled to be the oncoming clutch and is engaged, and the third clutch C3 is controlled to remain unchanged and remain disengaged; to switch from the second gear to the third gear, the first clutch B1 is controlled to remain unchanged and remain disengaged, the second clutch B2 is controlled to be the offgoing clutch and is disengaged, and the third clutch C3 is controlled to be the oncoming clutch and is engaged.

Regardless of whether the hybrid vehicle is operating in the series-connection mode or in the parallel-connection mode, gear shifting control needs to be performed. The performance of the gear shifting control has an important impact on drivability, and the smoothness of the gear shifting process still needs to be improved at present. Although a kind of hybrid architecture applicable to the embodiments of the present disclosure is shown above, the gear shifting control methods of the embodiments of the present disclosure are not limited to a specific hybrid architecture or limited to the gear shifting of hybrid vehicles, but can also be used for the gear shifting of electric vehicles and fuel vehicles. For all scenarios where gear shifting control is achieved by disengaging one clutch and engaging another clutch in other power architectures, the gear shifting control methods of the embodiments of the present disclosure can be used.

In one embodiment, the gear shifting process includes three phases. When the gear shifting type is power-on upshift (Power on up) or power-off downshift (Power off down), the order of the three phases is: an oil filling phase, a torque exchange phase, and a speed regulation phase. When the gear shifting type is power-on downshift (Power on down) and power-off upshift (Power off up), the order of the three phases is: the oil filling phase, the speed regulation phase, and the torque exchange phase. Among them, the power-on upshift may also be called throttle-step-on upshift; the power-on downshift may also be called throttle-step-on downshift; the power-off upshift may also be called throttle-release upshift; and the power-off downshift may also be called throttle-release downshift.

Before the oncoming clutch is engaged, there is a certain gap between a driving part (such as a driving disc) and a driven part (such as a driven disc) of the clutch. In the oil filling phase, oil filling control is performed on the oncoming clutch to quickly eliminate this gap, so that the oncoming clutch can reach the torque transmission state within a shorter amount of time. The speed of clutch oil filling and the follow performance of pressure after oil filling completion have an important impact on drivability and power response in the gear shifting process.

In the torque exchange phase, the disengagement of the offgoing clutch and the engagement of the oncoming clutch are performed simultaneously, and the clutch torque is exchanged from the offgoing clutch to the oncoming clutch.

In the speed regulation phase, a transmission control unit generates an inertial torque (Inertial Torque), also called a speed-regulation intervention torque, by sending a torque decrease or torque increase request. Under the action of the inertial torque, the rotation speed of the power mechanism (such as the engine) is changed until the target rotation speed is reached.

In the torque exchange phase, the torque control of the offgoing clutch and the oncoming clutch is performed at set time intervals, which can be achieved based on a progress percentage. The progress percentage is equal to a ratio of the current exchanged duration to the torque exchange duration (i.e., the duration of the torque exchange phase), and the current exchanged duration is equal to the current time minus the start time of the torque exchange phase. In some exemplary implementations, in the torque exchange process, the gear shifting torque allocated to the offgoing clutch and the gear shifting torque allocated to the oncoming clutch change linearly (i.e., the absolute values of the gradients of the gear shifting torques remain unchanged), where the gear shifting torque allocated to the offgoing clutch decreases linearly over time, while the gear shifting torque allocated to the oncoming clutch increases linearly over time. However, the gear shifting torque allocated to the clutch serves as a request torque of the clutch, and an actual torque generated when performing torque control is also related to response characteristics of a torque control system. For example, the response speed of the torque control system with respect to the same request torque change is different at different phases of control. This change in the response speed can lead to a phenomenon of a torque surge and bulging, affecting the smoothness of the gear shifting.

An embodiment of the present disclosure provides a gear shifting control method, as shown in FIG. 4, including the following steps.

Step 110, determining a torque exchange duration and a total clutch request torque T0 in a torque exchange phase.

In an exemplary embodiment of the present disclosure, the total clutch request torque may be equal to a request torque of an offgoing clutch before a torque exchange.

Step 120, within the torque exchange duration, gradually decreasing a gear shifting torque Toff allocated to the offgoing clutch, and gradually increasing a gear shifting torque Ton allocated to an oncoming clutch, where it is satisfied that Toff +Ton =T0;

where Ton and Toff are set to change nonlinearly within the torque exchange duration to suppress an impact of a response speed change of a torque control system on smoothness of a torque exchange.

In an exemplary embodiment of the present disclosure, the torque control system is faster in response speed at the initial phase of the torque exchange, and then the response speed becomes slower. In this case, the absolute values of the gradients of Ton and Toff can be controlled to first change from small to large within the torque exchange duration, where the absolute values of the gradients of Ton and Toff reflect the speed of change of Ton and Toff. In this case, although the response speed of a hydraulic system is faster at the initial phase, due to the slower change of Ton and Toff, the torque surge can be suppressed to avoid the phenomenon of bulging, thereby improving the smoothness of the gear shifting. After the absolute values of the gradients of Ton and Toff change from small to large, the response speed of the torque control system tends to stabilize, at which time the change speed of Ton and Toff can be maintained, and the change speed of Ton and Toff can also be reduced so that the later phase of the torque exchange can be smooth, until the end. Within the entire torque exchange duration, the absolute values of the gradients of Ton and Toff first change from small to large, and then can be set to change from large to small, or to remain unchanged, or to change in other ways such as changing from large to small and then remaining unchanged, and so on.

In another exemplary embodiment of the present disclosure, the torque control system is slower in response speed at the initial phase of the torque exchange, and then the response speed becomes faster. In this case, the absolute values of the gradients of Ton and Toff can be controlled to first change from large to small within the torque exchange duration. It can also suppress the phenomenon of a torque surge caused by a change in the response speed of the torque control system, making the torque exchange smoother. After the absolute values of the gradients of Ton and Toff change from large to small, the absolute values of the gradients of Ton and Toff can be set to remain unchanged, or to change from small to large, or to change in other ways.

In the gear shifting control method of the embodiments, the gear shifting torque allocated to the offgoing clutch and the gear shifting torque allocated to the oncoming clutch are no longer simply set to change linearly, but are set to change nonlinearly according to the response characteristics of the torque control system to suppress the impact of the response speed change of the torque control system on the smoothness of the torque exchange, thereby improving the smoothness of the gear shifting process. The torque control system of the embodiments of the present disclosure refers to a torque control system for controlling the clutch torques, which may be a hydraulic system but is not limited thereto.

In another exemplary embodiment of the present disclosure, the torque control system is hydraulic system control, and the absolute values of the gradients of Ton and Toff are set to first change from small to large (such as monotonically increasing) within the torque exchange duration. This is a setting made for the situation where the hydraulic system is faster in response speed at the initial phase of the torque exchange and then the response speed becomes slower, so as to suppress the impact of the response speed change of the hydraulic system on the smoothness of the torque exchange. The hydraulic system may be an oil pressure system. After the absolute values of the gradients of Ton and Toff first change from small to large, they may remain unchanged, or may then change from large to small (such as monotonically decreasing).

In an exemplary embodiment of the present disclosure, within the torque exchange duration, gradually decreasing the gear shifting torque Toff allocated to the offgoing clutch, and gradually increasing the gear shifting torque ton allocated to the oncoming clutch includes:

within the torque exchange duration, executing the following processing at set time intervals: obtaining an initial progress percentage according to a ratio of a current exchanged duration to the torque exchange duration; correcting the initial progress percentage, and calculating Toff and Ton according to a corrected progress percentage and T0; where within the torque exchange duration, an absolute value of a gradient of the corrected progress percentage first changes from small to large and then changes from large to small, or first changes from small to large and then remains unchanged. The aforementioned current exchanged duration is equal to the current time minus the start time of the torque exchange phase.

In an example of the present embodiment, correcting the initial progress percentage includes: adding a current correction value to the initial progress percentage to obtain the corrected progress percentage, where the current correction value is calculated based on a trigonometric function with the initial progress percentage as an independent variable. For example, the current correction value is calculated by the following formula: $X = \sin(P0 \times 0.0628) \times k$, where $X$ is the current correction value, $P0$ is the initial progress percentage, and $k$ represents a correction coefficient, where $k$ is determined according to the total clutch request torque, such as being obtained by looking up a table according to the total clutch request torque. In this example, the progress percentage of the torque exchange is corrected by injecting a sin curve, but the sine function may also be replaced by a cosine function, or other function forms that can make the absolute value of the gradient of the corrected progress percentage first change from small to large.

In an example of the present embodiment, Toff and Ton calculated according to the corrected progress percentage and T0 satisfy: $Ton = T0 \times P'$, $Toff = T0 \times (100\%-P)$, where $P'$ is the corrected progress percentage. There may be many specific calculation processes for Toff and Ton. For example, Toff may be calculated first and then Toff may be subtracted from T0 to obtain Ton; or, Ton may be calculated first and then Ton may be subtracted from T0 to obtain Toff, or, formulas $Ton = T0 \times P'$, $Toff = T0 \times (100\%-P')$ may be directly used to calculate Toff and Ton. $P'$ can also represent the corrected progress percentage of the offgoing clutch, and $(100\%-P')$ represents the corrected progress percentage of the oncoming clutch.

In an example of the present embodiment, the corrected progress percentage $P'$ of the offgoing clutch = ((the current exchanged duration/the torque exchange duration) $\times$ 100 + the correction value) %; where (the current exchanged duration /the torque exchange duration) $\times$ 100 is the initial progress percentage P, and the correction value = sin (the initial progress percentage $\times$ 0.0628) $\times$ the correction coefficient. The correction coefficient can be obtained by looking up a table according to the total clutch request torque. The sum of the corrected progress percentages of the offgoing clutch and the oncoming clutch is equal to 100. By calculating the corrected progress percentage of one of the clutches, the corrected progress percentage of the other clutch can be directly obtained by subtraction.

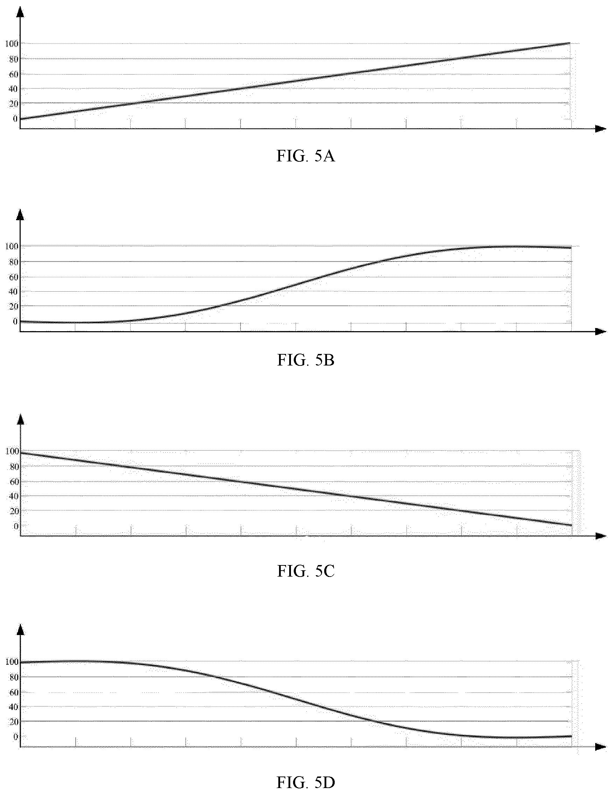

FIG. 5A is a diagram of a progress percentage curve of an oncoming clutch without correction; FIG. 5B is a diagram of a progress percentage curve of an oncoming clutch after correction according to an embodiment of the present disclosure; FIG. 5C is a diagram of a progress percentage curve of an offgoing clutch without correction; FIG. 5D is a diagram of a progress percentage curve of an offgoing clutch after correction according to an embodiment of the present disclosure. It can be seen that the progress percentage curves after correction in the embodiments of the present disclosure introduce the characteristics of the sine curve, changing slowly in the initial phase, changing quickly in the intermediate phase, and changing slowly in the final phase, that is, the absolute values of the gradients have the characteristics of changing from small to large and then from large to small. In addition to the sine function, other trigonometric functions, as well as continuous functions, discrete functions or combinations of functions that can achieve these characteristics, can be used in the embodiments of the present disclosure.

In another exemplary embodiment of the present disclosure, no correction may be made when calculating the progress percentage. After calculating the gear shifting torque allocated to the offgoing clutch and the gear shifting torque allocated to the oncoming clutch according to the no-correction progress percentage (i.e., the above-mentioned initial progress percentage) and T0, the calculated gear shifting torque allocated to the offgoing clutch is corrected to obtain Toff, and the calculated gear shifting torque allocated to the oncoming clutch is corrected to obtain Ton. Toff and Ton are respectively used as the request torques of the offgoing clutch and the oncoming clutch to realize the torque exchange. The effect of this manner is equivalent to the manner of correcting the progress percentage, and both are within the scope of protection of the present disclosure.

In the embodiments of the present disclosure, the progress percentage is obtained according to the ratio of the current exchanged duration to the torque exchange duration, and then the obtained progress percentage is corrected (e.g., by injecting the characteristics of a sine curve), and Toff and Ton are calculated according to the corrected progress percentage and T0. It can be achieved that the absolute values of the gradients of Ton and Toff first change from small to large within the torque exchange duration, so that the gear shifting torque allocated to the oncoming clutch changes slowly in the initial phase, changes quickly in the intermediate phase, and changes slowly in the final phase, thereby suppressing the bulging phenomenon caused by the response speed change of the torque control system and improving the smoothness of the gear shifting.

In an exemplary embodiment of the present disclosure, the torque exchange duration is obtained through the processing of the following steps.

First step: obtaining corresponding torque exchange durations respectively according to the following multiple manners.

The first manner: the torque exchange duration is obtained by looking up a table according to the total clutch request torque and an input shaft rotation speed corresponding to a target gear. The greater the total clutch request torque and the higher the input shaft rotation speed corresponding to the target gear, the shorter the time, so as to prevent the clutch from overheating. Among them, in the situation where the forward gears include the first gear, the second gear and the third gear, in the case of power-on upshift and power-off upshift, the target gear is the second gear or the third gear; in the case of power-on downshift and power-off downshift, the target gear is the first gear or the second gear. Taking the hybrid architecture shown in FIG. 3 as an example, the shaft connected to the second sun gear S2 of the double-row planetary gear in the figure to realize power input is called the input shaft.

The second manner: the torque exchange duration is obtained by looking up a table according to the oil temperature of the hydraulic system, and the torque exchange duration is the maximum torque exchange duration allowed by the current oil temperature.

The third manner: the torque exchange duration is obtained by looking up a table according to the clutch temperature, and the torque exchange duration is the maximum torque exchange duration allowed by the current clutch temperature.

The fourth manner: the torque exchange duration is calculated according to the maximum energy of the clutch (according to the hardware setting), and the torque exchange duration = the maximum energy value of the clutch / (the total clutch request torque $\times$ a slip).

Second step: taking the minimum value among all the obtained torque exchange durations as the final torque exchange duration, that is, this torque exchange duration is used to calculate the gear shifting torque allocated to the offgoing clutch and the gear shifting torque allocated to the oncoming clutch.

When the gear shifting torque of the offgoing clutch is equal to the total clutch request torque, the torque exchange phase is completed. To ensure that the torque of the offgoing clutch is fully unloaded, entering the speed regulation phase can be delayed for a time period.

In an exemplary embodiment of the present disclosure, the method also includes: before the torque exchange phase, performing oil filling control in three phases, where oil filling is performed on the oncoming clutch in a first phase, in a second phase, and in a third phase using a first oil pressure, a second oil pressure, and a third oil pressure, respectively, where the third oil pressure is equal to a half-engagement point pressure of the oncoming clutch, and the second oil pressure is greater than the third oil pressure and less than the first oil pressure.

In an example of the present embodiment, a difference obtained by subtracting the second oil pressure from the first oil pressure is greater than a difference obtained by subtracting the third oil pressure from the second oil pressure. The first oil pressure is set larger to speed up the oil filling speed and shorten the time required for the oil filling phase.

In an example of the present embodiment, a duration of the first phase is shorter than a sum of a duration of the second phase and a duration of the third phase, so that the oil pressure reaches the half-engagement point pressure of the oncoming clutch as soon as possible.

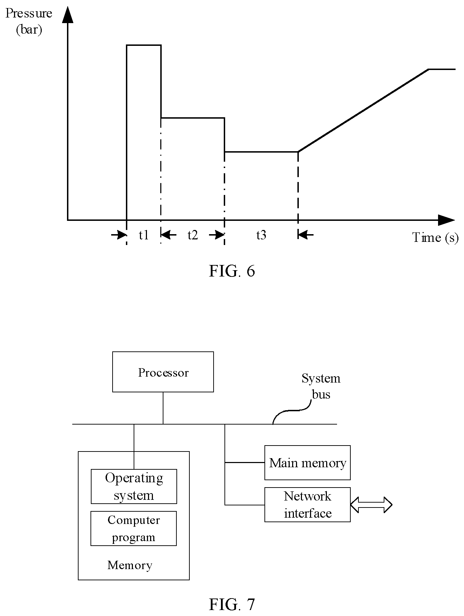

FIG. 6 is a pressure control curve (i.e., an oil filling curve, Clutch filling strategy diagram) of the oncoming clutch in this embodiment. As shown in the figure, the oil filling control process of this embodiment sequentially includes the following three phases.

The first phase (which may be called a high-pressure oil filling phase) corresponds to the time period t1 in FIG. 6. As shown in the figure, the high-pressure oil filling phase uses the higher first oil pressure to fill the clutch with oil so as to activate a solenoid valve, thereby improving the actual pressure response of the clutch. The duration of the high-pressure oil filling phase is shorter than the other two phases. The oil filling pressure (the first oil pressure) and oil filling time used in the high-pressure oil filling phase are related to the oil temperature, and can be determined according to the current oil temperature as well as the oil filling pressure and oil filling time calibrated at different oil temperatures. The oil filling pressure and oil filling time of this phase calibrated at different oil temperatures can be determined according to test results.

The second phase (which may be called a medium-pressure oil filling phase) corresponds to the time period t2 in FIG. 6. As shown in the figure, the medium-pressure oil filling phase uses the second oil pressure to fill the clutch with oil, allowing the oil to flow into the clutch oil circuit. The second oil pressure is lower than the first oil pressure and slightly higher than the half-engagement point (i.e., KP point) pressure of the clutch. The difference obtained by subtracting the second oil pressure from the first oil pressure is greater than the difference obtained by subtracting the third oil pressure from the second oil pressure, so that the oil filling pressure of the clutch approaches the KP point pressure as soon as possible. The oil filling pressure and oil filling time of the medium-pressure oil filling phase are related to the oil temperature, and can be determined according to the current oil temperature as well as the oil filling pressure and oil filling time of this phase calibrated at different oil temperatures.

The third phase (which may be called a low-pressure oil filling phase) corresponds to the time period t3 in FIG. 6. As shown in the figure, the low-pressure oil filling phase uses the third oil pressure to fill the clutch with oil. The third oil pressure is equal to the KP point pressure, so that the clutch pressure reaches the KP point to prevent overfilling. There are differences in KP point pressures at different ambient temperatures and among different samples. During the initial oil filling calibration, the test can be conducted on a single sample and calibration can be performed according to a test result; after that, the KP point pressure of the clutch can be determined through self-learning.

In each of the above phases, a transmission control unit or other control units can send a corresponding oil pressure request to a hydraulic control system that supplies oil to the clutch, and the hydraulic control system can generate a corresponding oil pressure.

In this embodiment, the oil filling phase is divided into three phases: the high-pressure oil filling phase, the medium-pressure oil filling phase and the low-pressure oil filling phase. High-pressure oil filling is performed first to improve the pressure response of the clutch, and then the medium-pressure oil filling is performed to make the oil filling pressure of the clutch approach the KP point pressure as soon as possible, and finally the low-pressure oil filling is performed to make the clutch pressure reach the KP point. The oil filling process of this embodiment is rapid and smooth, which can prevent overfilling, is conducive to smooth torque transmission in the initial phase of gear shifting, eliminates any jerking sensations, and can quickly complete the gear shifting process.

Oil pressure control is still required in the torque exchange phase and the speed regulation phase of the gear shifting process, as shown in the oil filling curve after time t3 in FIG. 6. By controlling the oil pressure at each phase of the gear shifting process, the oncoming clutch can be smoothly engaged and pressed until it is locked. The offgoing clutch can be quickly disengaged and released, ensuring the power stability of the shifting process.

In the torque exchange phase (Torque Phase), the engagement of the oncoming clutch and the disengagement of the offgoing clutch are performed simultaneously. The torque of the oncoming clutch gradually increases, while the torque of the offgoing clutch gradually decreases. At the end of the torque exchange phase, the torque is completely generated by the oncoming clutch. After that, the gear shifting process enters the speed regulation phase, which may also be called an inertia phase.

The present disclosure also provides a vehicle controller, as shown in FIG. 7, including a processor and a memory storing a computer program, where the processor can implement the gear shifting control method described in any embodiment of the present disclosure when executing the computer program. The vehicle controller may also include components such as a main memory and a network interface. The vehicle controller may be a transmission control module, a whole-machine control module, etc., and the present disclosure is not limited thereto.

The processor of the above embodiment of the present disclosure may be a general-purpose processor, including a central processing unit (CPU), a network processor (Network Processor, NP for short), a microprocessor, etc., or other conventional processors, etc. The processor may also be a digital signal processor (DSP), an application-specific integrated circuit (ASIC), a field-programmable gate array (FPGA), discrete logic or other programmable logic devices, discrete gate or transistor logic devices, discrete hardware components, or other equivalent integrated or discrete logic circuits, or a combination of the above devices. That is, the processor of the above embodiment may be any processing device or device combination for implementing the various methods, steps and logic block diagrams disclosed in the embodiments of the present invention. If the embodiments of the present disclosure are partially implemented in software, the instructions for the software may be stored in a suitable non-volatile computer-readable storage medium, and one or more processors may be used to execute the instructions in hardware to implement the methods of the embodiments of the present disclosure. The term "processor" used herein may refer to the above structure or any other structure suitable for implementing the technology described herein.

An embodiment of the present disclosure also provides a vehicle, including the vehicle controller described in any embodiment of the present disclosure. In one example, the vehicle is a hybrid vehicle, and the offgoing clutch and the oncoming clutch are clutches in a hybrid transmission. However, in other examples, the vehicle may be a fuel vehicle, an electric vehicle, or the like.

An embodiment of the present disclosure also provides a non-transitory computer-readable storage medium. The computer-readable storage medium stores a computer program, where the gear shifting control method described in any embodiment of the present disclosure can be implemented when the computer program is executed by a processor.

In one or more of the above exemplary embodiments, the functions described may be implemented in hardware, software, firmware, or any combination thereof. If implemented in software, the functions may be stored as one or more instructions or codes on a computer-readable medium or transmitted via a computer-readable medium, and executed by a hardware-based processing unit. The computer-readable medium may include a computer-readable storage medium corresponding to a tangible medium such as a data storage medium, or a communication medium including any medium that facilitates transmission of a computer program from one place to another, for example, according to a communication protocol. In this way, a computer-readable medium may generally correspond to a non-temporary tangible computer-readable storage medium or a communication medium such as a signal or carrier wave. The data storage medium may be any available medium that can be accessed by one or more computers or one or more processors to retrieve instructions, codes, and/or data structures for implementing the technology described in the present disclosure. A computer program product may include a computer-readable medium.

By way of example and not as a limitation, such computer-readable storage media may include a RAM, a ROM, an EEPROM, a CD-ROM or other optical disk storage apparatuses, a magnetic disk storage apparatus or other magnetic storage apparatuses, a flash memory, or any other medium that can be used to store the desired program code in the form of instructions or data structures and can be accessed by a computer. Moreover, any connection may also be referred to as a computer-readable medium. For example, if instructions are transmitted from a website, server or other remote source using a coaxial cable, a fiber optic cable, a twisted pair, a digital subscriber line (DSL), or wireless technology such as infrared, radio and microwave, then the coaxial cable, the fiber optic cable, the twisted pair, the DSL, or the wireless technology such as infrared, radio and microwave are included in the definition of medium. However, it should be understood that computer-readable storage media and data storage media do not include connections, carrier waves, signals, or other transient (transitory) media, but are directed to non-transient tangible storage media. As used herein, magnetic disks and optical disks include compact disks (CDs), laser disks, optical disks, digital versatile disks (DVDs), floppy disks, or Blu-ray disks, etc., where disks typically reproduce data magnetically, while optical disks use lasers to reproduce data optically. The combination of the above should also be included within the scope of computer-readable media. Although the embodiments disclosed in the present disclosure are as above, the contents described are only embodiments adopted to facilitate understanding of the present disclosure and are not intended to limit the present disclosure. Any technician in the field to which the present disclosure belongs can make any modifications and changes in the forms and details of implementation without departing from the spirit and scope disclosed in the present disclosure, but the scope of patent protection of the present disclosure shall still be defined by the attached claims.

**Claims**

1. A gear shifting control method, comprising:

   determining a torque exchange duration and a total clutch request torque T0 in a torque exchange phase;

   within the torque exchange duration, gradually decreasing a gear shifting torque Toff allocated to an offgoing clutch, and gradually increasing a gear shifting torque Ton allocated to an oncoming clutch, wherein it is satisfied that Toff +Ton =T0;

   wherein Ton and Toff are set to change nonlinearly within the torque exchange duration to suppress an impact of a response speed change of a torque control system on smoothness of a torque exchange.

2. The method according to claim 1, wherein, the torque control system is hydraulic system control, and absolute values of gradients of Ton and Toff are set to first change from small to large within the torque exchange duration.

3. The method according to claim 1, wherein, within the torque exchange duration, gradually decreasing the gear shifting torque Toff allocated to the offgoing clutch, and gradually increasing the gear shifting torque Ton allocated to the oncoming clutch comprises:

   within the torque exchange duration, executing the following processing at set time intervals: obtaining an initial progress percentage according to a ratio of a current exchanged duration to the torque exchange duration; correcting the initial progress percentage, and calculating Toff and Ton according to a corrected progress percentage and T0; wherein within the torque exchange duration, an absolute value of a gradient of the corrected progress percentage first changes from small to large and then changes from large to small, or first changes from small to large and then remains unchanged.

4. The method according to claim 2, wherein, correcting the initial progress percentage comprises: adding a current correction value to the initial progress percentage to obtain the corrected progress percentage, wherein the current correction value is calculated based on a trigonometric function with the initial progress percentage as an independent variable.

5. The method according to claim 4, wherein,

   the current correction value is calculated by the following formula:

   $$X = \sin\left(P0 \times 0.0628\right) \times k,$$

   wherein X is the current correction value, P0 is the initial progress percentage, and k represents a correction coefficient, wherein k is determined according to the total clutch request torque.

**6.** The method according to claim 3, wherein,
Toff and Ton calculated according to the corrected progress percentage and T0 satisfy: Ton =T0 $\times$ P, Toff =T0 $\times$ (100% - P), wherein P is the corrected progress percentage.

**7.** The method according to claim 1, wherein the method further comprises:
before the torque exchange phase, performing oil filling control in three phases, wherein oil filling is performed on the oncoming clutch in a first phase, in a second phase, and in a third phase using a first oil pressure, a second oil pressure, and a third oil pressure, respectively, wherein the third oil pressure is equal to a half-engagement point pressure of the oncoming clutch, and the second oil pressure is greater than the third oil pressure and less than the first oil pressure.

**8.** The method according to claim 7, wherein,
a difference obtained by subtracting the second oil pressure from the first oil pressure is greater than a difference obtained by subtracting the third oil pressure from the second oil pressure.

**9.** The method according to claim 7 or 8, wherein,
a duration of the first phase is shorter than a sum of a duration of the second phase and a duration of the third phase.

**10.** A vehicle controller, comprising a processor and a memory storing a computer program, wherein the processor is capable of implementing the gear shifting control method according to any one of claims 1 to 9 when executing the computer program.

**11.** A vehicle, comprising the vehicle controller according to claim 10.

**12.** The vehicle according to claim 11, wherein the vehicle is a hybrid vehicle, and the offgoing clutch and the oncoming clutch are clutches in a hybrid transmission.

**13.** A non-transitory computer-readable storage medium, wherein the computer-readable storage medium stores a computer program, and when the computer program is executed by a processor, the gear shifting control method according to any one of claims 1 to 9 is capable of being implemented.

FIG. 1

FIG. 2

S1    B2

C3    R2/PC1    B1    Output to wheel end

PC2/R1

P2    C0    P1    ICE

S2

FIG. 3

110

Determining a torque exchange duration and a total clutch request torque $T_0$ in a torque exchange phase

120

Within the torque exchange duration, gradually decreasing a gear shifting torque $T_{off}$ allocated to an offgoing clutch, and gradually increasing a gear shifting torque $T_{on}$ allocated to an oncoming clutch, where it is satisfied that $T_{off} + T_{on} = T_0$; where $T_{on}$ and $T_{off}$ are set to change nonlinearly within the torque exchange duration

FIG. 4

FIG. 5A

FIG. 5B

FIG. 5C

FIG. 5D

Pressure
(bar)

t1    t2    t3      Time (s)

FIG. 6

Processor

System
bus

Operating
system

Main memory

Computer
program

Network
interface

Memory

FIG. 7

## INTERNATIONAL SEARCH REPORT

| International application No. |
| --- |
| **PCT/CN2023/131031** |

### A. CLASSIFICATION OF SUBJECT MATTER

F16H61/04(2006.01)i

According to International Patent Classification (IPC) or to both national classification and IPC

### B. FIELDS SEARCHED

Minimum documentation searched (classification system followed by classification symbols)

IPC:F16H

Documentation searched other than minimum documentation to the extent that such documents are included in the fields searched

Electronic data base consulted during the international search (name of data base and, where practicable, search terms used)

CNTXT, DWPI, ENTXT, VEN, CNKI: 换挡, 扭矩, 离合器, 分离, 结合, 接合, 线性, 时长, 时间, 平滑, 平顺, shift, torque, clutch, separat+, disengag+, combin+, engag+, coupl+, linear, time

### C. DOCUMENTS CONSIDERED TO BE RELEVANT

| Category* | Citation of document, with indication, where appropriate, of the relevant passages | Relevant to claim No. |
| --- | --- | --- |
| X | CN 104048037 A (FORD GLOBAL TECHNOLOGIES, LLC) 17 September 2014 (2014-09-17) description, pages 3-9, and figures 1-8 | 1-13 |
| A | CN 114763838 A (GUANGZHOU AUTOMOBILE GROUP CO., LTD.) 19 July 2022 (2022-07-19) entire document | 1-13 |
| A | CN 111795139 A (BAIC MOTOR CO., LTD.) 20 October 2020 (2020-10-20) entire document | 1-13 |
| A | CN 113619586 A (NINGBO GEELY ROYAL ENGINE COMPONENTS CO., LTD. et al.) 09 November 2021 (2021-11-09) entire document | 1-13 |
| A | JP 2004251455 A (BORGWARNER INC.) 09 September 2004 (2004-09-09) entire document | 1-13 |
| A | US 2016312884 A1 (FORD GLOBAL TECHNOLOGIES, LLC.) 27 October 2016 (2016-10-27) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2024** | **22 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131031**

| Patent document cited in search report | | | Publication date (day/month/year) | Patent family member(s) | | | Publication date (day/month/year) |
|---|---|---|---|---|---|---|---|
| CN | 104048037 | A | 17 September 2014 | DE | 102014204256 | A1 | 02 October 2014 |
| | | | | DE | 102014204256 | B4 | 16 March 2023 |
| | | | | US | 2014277974 | A1 | 18 September 2014 |
| | | | | US | 8938340 | B2 | 20 January 2015 |
| CN | 114763838 | A | 19 July 2022 | None | | | |
| CN | 111795139 | A | 20 October 2020 | None | | | |
| CN | 113619586 | A | 09 November 2021 | None | | | |
| JP | 2004251455 | A | 09 September 2004 | JP | 4126023 | B2 | 30 July 2008 |
| | | | | EP | 1449708 | A1 | 25 August 2004 |
| | | | | EP | 1449708 | B1 | 19 April 2006 |
| | | | | DE | 602004000650 | D1 | 24 May 2006 |
| | | | | DE | 602004000650 | T2 | 07 September 2006 |
| | | | | US | 2004166992 | A1 | 26 August 2004 |
| | | | | US | 6790159 | B1 | 14 September 2004 |
| US | 2016312884 | A1 | 27 October 2016 | US | 9683656 | B2 | 20 June 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211449384